# EUROPÄISCHE PATENTSCHRIFT

(11) **EP 3 529 062 B1**
(45) Veröffentlichungstag und Bekanntmachung des Hinweises auf die Patenterteilung: **07.06.2023**
(21) Anmeldenummer: 17786826.2
(22) Anmeldetag: 17.10.2017
(51) Int. Cl.: B29C 70/52

(54) **VERFAHREN ZUR HERSTELLUNG EINES THERMOPLASTISCHEN FENSTER- ODER TÜR-HOHLKAMMERPROFILS**
METHOD FOR PRODUCING A THERMOPLASTIC WINDOW OR DOOR HOLLOW CHAMBER PROFILE
PROCÉDÉ DE FABRICATION D'UN PROFILÉ À COMPARTIMENTS CREUX THERMOPLASTIQUE POUR FENÊTRE OU PORTE

(30) Priorität: 18.10.2016 DE 102016119766
(43) Veröffentlichungstag der Anmeldung: 28.08.2019
(73) Patentinhaber: REHAU Industries SE & Co. KG, 95111 Rehau (DE)
(72) Erfinder: SCHMIDT, Steven, 95182 Döhlau OT Tauperlitz (DE); FINK, Norbert, 90542 Eckental (DE); RHÖNISCH, Thomas, 95032 Hof (DE); AL-SHEYYAB, Ahmand, 95111 Rehau (DE)
(86) Internationale Anmeldenummer: PCT/EP2017/001221
(87) Internationale Veröffentlichungsnummer: WO 2018/072878

(56) Entgegenhaltungen:
- EP-A1- 0 752 306
- EP-A2- 1 842 657
- WO-A1-2006/051084
- WO-A1-2012/139582
- WO-A1-2015/168440
- US-A1- 2006 045 980

## Beschreibung

Die Erfindung betrifft ein Verfahren mit den Merkmalen des Oberbegriffs des Patentanspruchs 1.

Ein Verfahren zur Herstellung eines thermoplastischen Fenster- oder Tür-Hohlkammerprofils ist aus der EP 2 528 723 B1 bekannt. Bei Fenster- bzw. Tür-Hohlkammerprofilen zur Einfassung von Glasscheiben besteht einerseits grundsätzlich das Bedürfnis, eine möglichst gute Wärmedämmung zu realisieren und andererseits auch die Erfordernis einer ausreichenden mechanischen Stabilität. Sofern ein entsprechendes Fenster- bzw. Tür-Hohlkammerprofil durch Extrusion aus unverstärktem, thermoplastischem Material, beispielsweise Polyvinylchlorid (PVC) hergestellt wird, ist daher aus statischen Gründen in der Regel der Einschub eines metallischen Armierungsprofiles in mindestens eine der Hohlkammern erforderlich. Hierdurch wird zwar die mechanische Stabilität erheblich verbessert, dieser Vorteil muss jedoch wegen dem gleichzeitig als Wärmebrücke fungierenden metallischen Armierungsprofil mit deutlich schlechteren Wärmedämmeigenschaften erkauft werden.

Um diesem Nachteil zu begegnen, haben sich daher bereits seit geraumer Zeit mit Fasern verstärkte PVC-Profile im Markt etabliert. So ist beispielsweise in der EP 2 191 090 B1 die Einbringung von Kurzglasfasern in die PVC-Matrix beschrieben, wodurch in vielen Anwendungsfällen auf den Einsatz einer Metallarmierung verzichtet werden kann.

Um die Länge der im Wege der Extrusion eingebrachten Verstärkungsfasern im Endprodukt zu erhöhen, wird in der EP 2 953 775 A1 vorgeschlagen, die entsprechenden Verstärkungsfasern vor ihrer Einbringung in den Extrusionsprozess als Granulat mit einer PVC-Ummantelung zu versehen, welche einen gewissen Schutz gegen die hohe mechanische Beanspruchung der Fasern im Extrusionsprozess gewährleistet. Hierdurch kann eine grö-ßere Faserlänge im Endprodukt und damit eine höhere mechanische Steifigkeit sichergestellt werden.

Eine weitere Verbesserung der mechanischen Eigenschaften bei gleichzeitig guter Wärmedämmung wird durch die Einbringung von nicht metallischen Verstärkungsbändern, beispielsweise Organoblechen, in das Hohlkammerprofil erreicht. Ein solches Verfahren ist in der EP 2 493 673 A1 beschrieben. Diese Organobleche verfügen in der Regel über endlose Fasern und können damit die mechanische Belastbarkeit des Profils noch einmal beträchtlich erhöhen.

Mit den vorbeschriebenen Maßnahmen kann gegenüber einem unverstärkten PVC-Profil eine erhebliche Steigerung der Steifigkeit erreicht werden. Für viele Anwendungsfälle ist dies jedoch noch nicht ausreichend. Aus diesem Grund werden beispielsweise für Tür- oder Fensterrahmen mit sehr großen Verglasungen über mehrere Quadratmeter häufig immer noch Aluminiumprofile eingesetzt, welche über eine herausragende mechanische Festigkeit verfügen. Nachteilig bei diesen Profilen sind selbstredend die schlechten Wärmedämmeigenschaften, weshalb derartige Profile mit vergleichsweise aufwendigen thermischen Trennkonstruktionen ausgerüstet werden müssen. Ein weiterer Nachteil von Aluminiumprofilen ist auch, dass sie ein vergleichsweise hohes Gewicht aufweisen und sehr teuer sind.

Die US 2006/045980 A1 zeigt ein Verfahren mit den Merkmalen des Oberbegriffs des Patentanspruchs 1.

Der Erfindung die Aufgabe zugrunde, ein Verfahren mit den eingangs beschriebenen Merkmalen anzugeben, mit dem die Herstellung von thermoplastischen Fenster- und Tür-Hohlkammerprofilen mit hoher mechanischer Stabilität und gleichzeitig guten Wärmedämmeigenschaften möglich ist.

Diese Aufgabe wird durch die Merkmales des Patentanspruchs 1 gelöst. Erfindungsgemäß wird also zur Herstellung eines thermoplastischen Fenster- bzw. Tür-Hohlkammerprofils ein Pultrusionsverfahren eingesetzt, bei dem endlose Faserstränge, welche während der Verfahrens in eine Polymermatrix eingebettet werden, aus dem Werkzeug herausgezogen werden. Derartige Pultrusionsverfahren sind im Stand der Technik bei der Herstellung von Duroplast-Profilen bekannt. Die Einsatzstoffe zur Herstellung von Duroplasten sind dünnflüssig und können daher im Wege eines Pultrusionsverfahrens gut verarbeitet werden. Aufgrund ihrer hohen Zähigkeit sind hingegen thermoplastische Materialien, welche aufgrund ihrer nachträglichen Bearbeitungsmöglichkeiten (schweißbar, plastisch verformbar etc.) und ihrer Eigenschaften (Zähigkeit, Recyclingfähigkeit etc.) im Fenster- und Türbau wesentliche Vorteile gegenüber Duroplasten bieten, für eine Pultrusion grundsätzlich nicht geeignet. Im Rahmen der Erfindung wird nun jedoch die chemische Herstellung des Thermoplasten erst im eigentlichen Pultrusionsprozess durch die Zufuhr entsprechender Monomere und/oder reaktiver Oligomere durchgeführt, also in Form einer reaktiven Pultrusion. Erfindungsgemäß wird die thermoplastische Matrix des Kernprofils hierbei aus dünnflüssigen, für die Verarbeitung in einer Pultrusion geeigneten Monomeren und/oder reaktiven Oligomeren hergestellt, die während der reaktiven Pultrusion zum Thermoplast polymerisiert werden. Zweckmäßigerweise sind die Oligomere aus jeweils 2 bis 100, z.B. 5 bis 50 Monomeren zusammen gesetzt. Bei Bedarf können der reaktiven Pultrusion Zusatzstoffe, z.B. Initiatoren, beispielsweise in Form von Peroxiden oder anderen Radikale bildenden Verbindungen, und/oder Katalysatoren und/oder Aktivatoren, wie z.B. Stabilisatoren und/oder Schlagzäh-Modifier, zugegeben werden. Je nach herzustellendem Thermoplast sind der reaktiven Pultrusion zwei oder mehr verschieden Monomere und/oder reaktive Oligomere zuzuführen (Bsp. Polyester). Im Rahmen der Erfindung liegt es aber auch, dass zur Polymerisation lediglich ein Monomer bzw. sich lediglich durch die Kettenlänge unterscheidende Oligomere eingesetzt werden (Bsp. PMMA). Die reaktive Pultrusion erlaubt insgesamt einen sehr hohen Faseranteil im Kernprofil, beispielsweise mehr als 60 Gew.-%, insbesondere mehr als 80 Gew.-% Faseranteil, so dass aufgrund dieses hohen Anteils an Endlosfasern eine beträchtliche Erhöhung der mechanischen Stabilität erzielt werden kann, welche beispielsweise um ein Mehrfaches höher ist als bei kurzglasfaserverstärkten Thermoplast-Profilen. Die endlosen Verstärkungsfasern bestehen vorzugsweise aus Glas- und/oder Carbonfasern. Die äußere Beschichtung hat zweckmäßigerweise eine Schichtdicke von maximal 5 mm, z.B. maximal 2 mm, ggf. maximal 1mm. Die zweckmäßigerweise aus einem Thermoplast, z.B. PVC, bestehende äußere Beschichtung kann bei ausreichender Dicke eine direkte Verschweißung von Fenster- oder Türprofilen über das Beschichtungsmaterial ermöglichen.

Durch die Kombination des reaktiven Pultrusionsprozesses mit einer Beschichtung des damit hergestellten Kernprofils wird sichergestellt, dass die im Fenster- und Türenbau hohen Anforderungen an die Oberfläche (z.B. Hochglanz, geringe Verschmutzungsneigung, Haptik) trotz des hohen Faseranteils des Kernprofils erfüllt werden können. Ferner kann durch eine entsprechende Materialwahl für die Beschichtung die bei Fenstern und Türen erforderliche Witterungsbeständigkeit des Hohlkammerprofils auf einfache und effiziente Weise gewährleistet werden. Insbesondere ist durch die vorzugsweise unverstärkte Beschichtung auch die Schweißbarkeit der Profile bei deren Zusammenbau zu einem Rahmen gewährleistet. Zweckmäßigerweise ist die Beschichtung vollflächig oder aber auch lediglich bereichsweise auf die äußere Oberfläche des Kernprofils aufgetragen. Eine vollflächige Auftragung meint, dass die Beschichtung das Kernprofil lückenlos umschließt. Dies kann zweckmäßig sein, sofern die gesamte äußere Oberfläche des Kernprofils die entsprechend hohe Oberflächengüte aufweisen muss. Wenn jedoch einzelne Bereiche des Kernprofils im späteren Gebrauch (z.B. aufgrund einer gemeinsam von Beschichtung und Kernprofil gebildeten Hohlkammer) verdeckt bzw. aufgrund der Montage weiterer Bauteile (z.B. Glasleiste, Glasscheibe etc.) nicht sichtbar oder nicht zugänglich sind, können diese Oberflächenbereiche des Kernprofils von der Beschichtung ausgespart werden. Vorzugsweise bedeckt die Beschichtung mindestens 70 %, z.B. mindestens 80 %, vorzugsweise mindestens 90 % der äußeren Oberfläche des Kernprofils.

Zweckmäßigerweise wird die thermoplastische Matrix des Kernprofils als Polyacrylat-Matrix, insbesondere PMMA-Matrix, ausgebildet. In diesem Fall werden der reaktiven Pultrusion die entsprechenden Monomere und/oder reaktiven Oligomere zur Herstellung von Polyacrylat, z.B. Polymethylmethacrylat (PMMA), zugeführt. Die Herstellung anderer Materialien während der reaktiven Pultrusion, beispielsweise von Polyester, z.B. Polyethylenterephthalat (PET), insbesondere schlagzähem Polyethylenterephthalat (PET-G), oder Polybutylenterephthalat (PBT), oder thermoplastischen Polyurethanen (TPU) wird hierdurch jedoch nicht ausgeschlossen. Die Herstellung von Polyamid, beispielsweise PA6 oder PA12, oder Bisphenol A (BPA), Polycarbonat (PC), Polyesteramiden oder Polyimiden mittels der reaktiven Pultrusion liegt hier ebenfalls im Rahmen der Erfindung.

Zweckmäßigerweise wird die Beschichtung aus einem auf dem Kernprofil haftenden Polymer hergestellt, welches vorzugsweise dem Material der thermoplastischen Matrix des Kernprofils entspricht. So wird beispielsweise bei der Ausbildung der thermoplastischen Matrix des Kernprofils als Polyacrylat-Matrix zweckmäßigerweise die Beschichtung ebenfalls aus Polyacrylat hergestellt. Grundsätzlich kommen für die Beschichtung dieselben Materialien wie für die Thermoplast-Matrix des Kernprofils infrage, also neben Polyacrylat (z.B. PMMA) insbesondere Polyester (z.B. PET, PET-G oder PBT), Polyurethane (z.B. TPU), Polyamide (z.B. PA6 oder PA12), BPA oder PC. Im Rahmen der Erfindung liegt es insbesondere auch, dass die Beschichtung aus Polyvinylchlorid (PVC), Styrene-Acrylonitrilen (SAN) oder Acrylnitil-Styrol-Acrylester (ASA) besteht, da diese Materialien witterungsbeständig sind. Alternativ kann die Beschichtung auch aus Polyesteramiden oder Polyimiden hergestellt werden. Zweckmäßigerweise besteht die Beschichtung aus einem nicht faserverstärkten Material.

Im Rahmen der Erfindung liegt es insbesondere, dass die äußere Beschichtung mit dem Kernprofil coextrudiert wird. Der Begriff Coextrusion meint in diesem Zusammenhang auch den Auftrag der Beschichtung auf das frisch hergestellte Kernprofil mittels einer unmittelbar an die reaktive Pultrusion online anschließenden Extrusion, wobei in diesem Fall auch die Zwischenkühlung des Kernprofils vor dem Auftrag der Beschichtung im Rahmen der Erfindung liegt. Alternativ hierzu können bei der Coextrusion das Kernprofil und die Beschichtung in einem gemeinsamen Werkzeug hergestellt werden.

Insbesondere im Rahmen der Coextrusion ist es möglich, dass lediglich von der Beschichtung mindestens ein Funktionselement gebildet wird. Das heißt konkret, dass nur Beschichtungsmaterial für die Bildung des Funktionselementes herangezogen wird und das Kernprofil an der geometrischen Gestaltung dieses Funktionselementes nicht beteiligt ist. Im Rahmen der Erfindung liegt aber auch die partielle Bildung mindestens eines Funktionselementes lediglich durch Beschichtungsmaterial, während in diesem Fall auch das Kernprofil partiell zur geometrischen Gestaltung dieses Elementes beiträgt. So kann beispielsweise die Beschichtung bereichsweise in Form einer Aufnahmevorrichtung, z.B. einer Aufnahmenut, beispielsweise für ein elastomeres Dichtungselement oder für ein Rastelement einer weiteren Komponente, z.B. einer Glasleiste, ausgebildet werden. Ebenso kann das Funktionselement als Rastelement zum Verrasten mit einer weiteren Komponente, z.B. einer Glasleiste etc., ausgebildet sein. Im Rahmen der Erfindung liegt es hierbei auch, dass die Beschichtung Vorsprünge einer vorzugsweise vom Kernprofil gebildeten Euronut zur Aufnahme von Fenster- bzw. Tür-Verriegelungselementen bildet. Ferner kann auch die Beschichtung selbst über eine oder mehrere Hohlkammern verfügen und/oder gemeinsam mit dem Kernprofil eine oder mehrere Hohlkammern bilden. Zweckmäßigerweise beträgt die Schichtdicke der Beschichtung in einem Oberflächenbereich von mindestens 50%, vorzugsweise mindestens 70 %, der von der Beschichtung bedeckten Oberfläche des Kernprofils höchstens 2 mm, vorzugsweise höchstens 1 mm.

Alternativ zur Coextrusion kann die äußere Beschichtung auch als Flüssigkeit und / oder Pulver auf das Kernprofil aufgetragen und danach zu einer Lackschicht ausgehärtet werden. Dies hat den Vorteil, dass für die nachträgliche Auftragung der Beschichtung kein Extruder erforderlich ist. Insbesondere können mittels dieses Verfahrens auch dünnflüssige Beschichtungsmaterialien aufgetragen werden. Gemäß einer weiteren Ausführungsform der Erfindung wird die Beschichtung als Folie auf das Kernprofil aufkaschiert. Eine Lackierung bzw. Folienkaschierung ist insbesondere dann vorteilhaft, wenn dieThermoplast-Matrix des Kernprofils als PA-, PET(nicht schlagzäh)- oder PBT-Matrix ausgebildet wird, um hier eine große Haftkraft der Beschichtung auf dem Kernprofil sicherzustellen. Als Material für die Lackschicht kommen insbesondere auf Polyurethanharz, Polyesterharz oder Epoxidharz basierende Lacke infrage. Sofern die Beschichtung als Folie aufkaschiert wird, kann diese z.B. Fluorpolymer und/oder Aluminium enthalten bzw. aus Fluorpolymer und/oder Aluminium bestehen. Bei einer Beschichtung in Form einer Lackierung oder Folie beträgt die Schichtdicke der Beschichtung zweckmäßigerweise maximal 1 mm, z.B. maximal 0,5 mm.

Insgesamt sind hinsichtlich des Materials des Kernprofils und der Beschaffenheit der Beschichtung insbesondere die folgenden Kombinationen vorteilhaft:

| Kernprofil | Beschichtung |
|---|---|
| Acrylat, z.B. PMMA | PVC, SAN, ASA oder Acrylat, z.B. PMMA |
| PA, z.B. PA6 | Nasslack, Pulverlack oder Folie |
| PET-G | PVC, SAN, ASA oder Acrylat, z.B. PMMA |
| PET (nicht schlagzäh) | Nasslack, Pulverlack oder Folie |
| PBT | Nasslack, Pulverlack oder Folie |

Es kann auch zweckmäßig sein, das z.B. eine PA-Matrix (insbes. PA6-Matrix) aufweisende Kernprofil zunächst mit der Beschichtung aus z.B. PA (insbesondere. PA6) zu versehen, beispielsweise zu coextrudieren, und daran anschließend die Beschichtung außenseitig mit einer vorzugsweise witterungsbeständigen zweiten Beschichtung, z.B. in Form eines Nass- oder Pulverlacks bzw. einer Kaschierfolie, zu versehen. Dies hat den Vorteil, dass die Oberflächenglättung bereits durch die erste Beschichtung sichergestellt ist und somit die z.B. die Witterungsbeständigkeit herstellende zweite Beschichtung sehr dünn ausgebildet werden kann. So kann z.B. die Ausbildung der zweiten Beschichtung als kaschierte Aluminiumfolie vorteilhaft sein, um beispielsweise besondere Farbgestaltungen zu ermöglichen.

Im Rahmen der Erfindung liegt es insbesondere, dass dem Material der Beschichtung vor dem Auftrag auf das Kernprofil Farbpigmente zugesetzt werden. Somit kann durch die Beschichtung auch das äußere Erscheinungsbild des Hohlkammerprofils maßgeblich beeinflusst werden. Farbpigmente im Sinne der Erfindung umfassen auch Weißpigmente, die dafür sorgen, dass das Hohlkammerprofil die bei Fenstern und Türen übliche "Farbe" Weiß erhält, z.B. durch den Einsatz des Weißpigmentes Titandioxid. Bei der Herstellung von Fenstern oder Türen besteht im Gegensatz hierzu jedoch auch häufig der Bedarf an farbigen, z.B. roten, grünen oder blauen Profilen. Im Rahmen der Erfindung ist es nun möglich, die Farbgebung mittels des ohnehin vorzugsweise bereits vorgesehenen Auftrags einer Beschichtung durchzuführen. Sofern die Aufbringung der Beschichtung durch die vorbeschriebene Aufkaschierung einer Folie erfolgt, ist diese entsprechend eingefärbt.

Das Hohlkammerprofil ist als Blendrahmenprofil oder Flügelrahmenprofil ausgebildet. Bei der Ausbildung des Hohlkammerprofils als Flügelrahmenprofil kann beispielsweise das Kernprofil mit einem Falzgrund zur Aufnahme mindestens einer Glasscheibe versehen werden. Das Kernprofil kann beispielsweise mindestens drei Hohlkammern aufweisen. Vorzugsweise stellt das Kernprofil den strukturellen Aufbau des Hohlkammerprofils dar, welches um die Beschichtung ergänzt wird. So kann beispielsweise die Querschnittsfläche des Kernprofils incl. der Querschnittsfläche etwaiger Hohlkammern mehr als 60 %, vorzugweise mehr als 80 % der Querschnittsfläche des Hohlkammerprofils incl. Hohlkammer(n) betragen.

Im Rahmen der Erfindung liegt es ferner, dass das als Blendrahmen- oder Flügelrahmenprofil ausgebildete Hohlkammerprofil als Kernelement ausgebildet ist, welches innen- und/oder außenseitig mit einer Schalung versehen ist. Vorzugsweise besteht diese Schalung aus Aluminium und/oder Holz und/oder Kunststoff. So können die Vorteile der erfindungsgemäßen Lehre mit dem gewünschten Design in Aluminium, Holz oder Kunststoff kombiniert werden.

Bei der Herstellung eines entsprechenden Fenster- oder Türrahmens können in bekannter Weise vier auf Gehrung geschnittene Hohlkammerprofile miteinander verbunden werden, z.B. durch Schweißen, Kleben oder mittels separater, endseitig eingeschobener Verbindungselemente.

Im Folgenden wird die Erfindung anhand einer lediglich ein Ausführungsbeispiel darstellenden Zeichnung ausführlich erläutert. Es zeigen schematisch:
- Fig. 1: ein erfindungsgemäßes Verfahren zur Herstellung eines Fenster-Hohlkammerprofils;
- Fig. 2: ein alternatives erfindungsgemäßes Herstellungsverfahren;
- Fig. 3a-c: erfindungsgemäß, beispielsweise mit einem Verfahren gemäß Fig.1 oder 2 hergestellte Hohlkammerprofile in einer Querschnittsdarstellung,
- Fig. 3d,e: weitere Ausführungsformen der erfindungsgemäßen Lehre und
- Fig. 4, 5: vergleichende Darstellungen hinsichtlich Steifigkeit und thermischem Ausdehnungskoeffizient erfindungsgemäß hergestellter Profile gegenüber dem Stand der Technik.

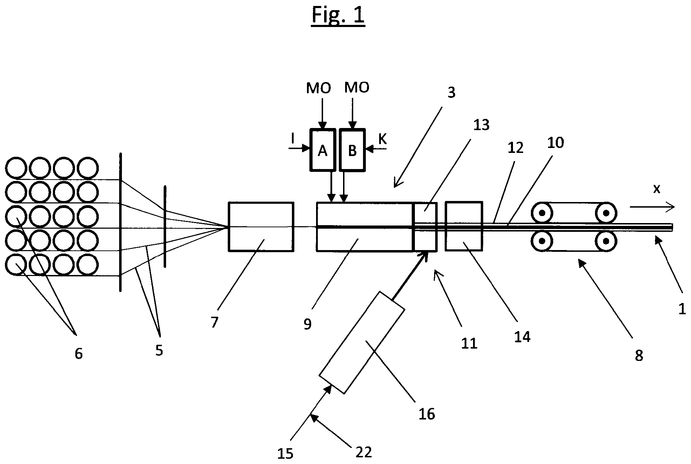

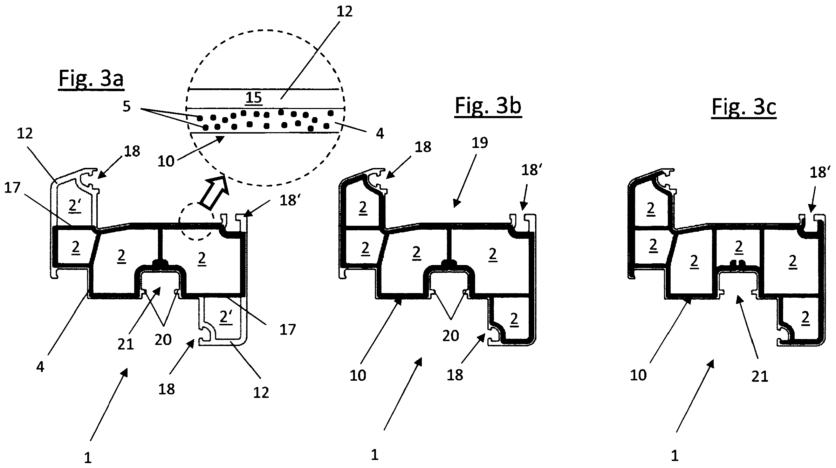

Die Fig. 1 zeigt ein erfindungsgemäßes Verfahren zur Herstellung eines thermoplastischen Fenster-Hohlkammerprofils 1. Bei diesem Verfahren wird das mehrere Hohlkammern 2, 2' (vergl. Fig. 3a-c) aufweisende Hohlkammerprofil 1 mithilfe eines Strangproduktionsprozesses 3 hergestellt. Während dieses Strangproduktionsprozesses 3 werden in die thermoplastische Matrix 4 des Hohlkammerprofils 1 endlose Verstärkungsglasfasern 5 integriert, die zunächst von Rollen 6 abgezogen und in einer Vorwärmstation 7 vorgewärmt werden. Erfindungsgemäß ist der Strangproduktionsprozess 3 als reaktive Pultrusion ausgebildet. Hierbei wird mittels eines Ziehwerkzeugs 8 das frisch hergestellte Hohlkammerprofil 1 über die endlosen Verstärkungsfasern 5 in Produktionsrichtung x aus dem beheizten Pultrusionswerkzeug 9 herausgezogen. Die reaktive Pultrusion 3 dient zur Herstellung eines endlos faserverstärkten, mehrere Hohlkammern 2 aufweisenden thermoplastischen Kernprofils 10 (s.a. Fig. 3a-c, schwarz eingefärbt) des Hohlkammerprofils 1. Hierbei wird die thermoplastische Matrix 4 dieses Kernprofils aus dünnflüssigen Monomeren und/oder reaktiven Oligomeren - beide mit MO bezeichnet - hergestellt, die während der reaktiven Pultrusion 3 zum Thermoplast polymerisiert werden. Neben den Monomeren und/oder reaktiven Oligomeren MO werden der reaktiven Pultrusion 3 zur Führung der darin stattfindenden chemischen Reaktion Initiatoren I und Katalysatoren K zugesetzt. Im Ausführungsbeispiel werden zur Polymerisation des Thermoplasts die mit MO bezeichneten Monomere bzw. Oligomere in zwei Komponenten A und B der reaktiven Pultrusion zugeführt. Die Komponente A enthält Mono-/Oligomere MO sowie Initiatoren I, während die Komponente B neben den Mono-/Oligomeren MO Katalysatoren K enthält. Damit wird sichergestellt, dass erst im Pultrusionswerkzeug 9 ein Reaktionsgemisch enthaltend Mono-/Oligomere MO sowie Initiatoren I und Katalysatoren K vorliegt und somit die Polymerisation auch erst im Pultrusionswerkzeug 9 gestartet wird. Auch über die Beheizung des Pultrusionswerkzeugs 9 kann die Polymerisationsgeschwindigkeit gesteuert werden. Im Ausführungsbeispiel kann die thermoplastische Matrix 4 als Polyacrylat-Matrix, insbesondere PMMA-Matrix ausgebildet werden. Das mit der reaktiven Pultrusion 3 hergestellte Kernprofil 10 wird zur Verbesserung der Oberflächengüte des Hohlkammerprofils 1 im Wege einer Coextrusion 11 mit einer äußeren Beschichtung 12, z.B. aus unverstärktem PVC, versehen. Beim Ausführungsbeispiel gemäß Fig. 1 findet die Coextrusion 11 unmittelbar im Anschluss an reaktive Pultrusion 3 ohne Zwischenkühlung statt. Hierbei ist das Coextrusionswerkzeug 13 unmittelbar hinter dem Austritt des Werkzeuges 9 für die reaktive Pultrusion 3 angeordnet und ummantelt das Kernprofil 10 online. Erst danach erfolgt die Abkühlung des coextrudierten Hohlkammerprofils 1 in einer Abkühlvorrichtung 14, z.B. einem Wasserbad. Alternativ hierzu können die reaktive Pultrusion 3 und die Coextrusion 11 auch in einem gemeinsamen Werkzeug durchgeführt werden.

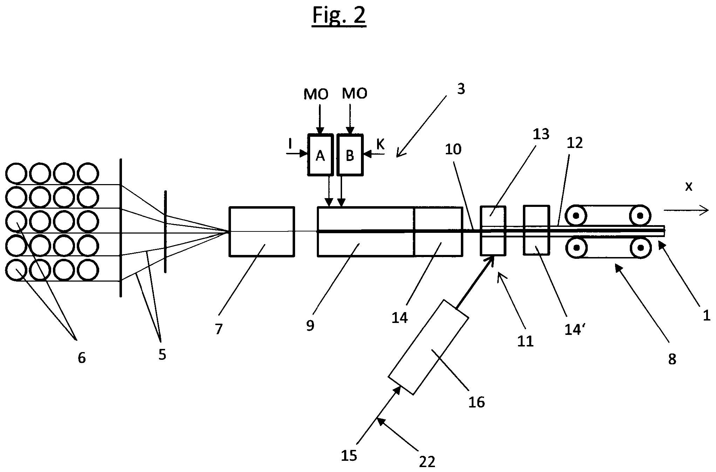

Beim Ausführungsbeispiel gemäß Fig. 2 hingegen erfolgt vor der ebenfalls online erfolgenden Coextrusion 11 der Beschichtung 12 zunächst in einer Abkühlvorrichtung 14 eine Zwischenkühlung des Kernprofils 10. Dies ist insbesondere bei der Coextrusion einer dicken Beschichtung 12 aufgrund des großen Wärmeeintrags sowie der Herstellung einer komplexen Kernprofilgeometrie von Vorteil, um diese vor der Coextrusion 11 zu stabilisieren. Die thermoplastische Matrix 4 des Kernprofils 10 wird wiederum als Polyacrylat-Matrix ausgebildet. Die coextrudierte Beschichtung 12 besteht aus PVC-Material 15, welches einem für die Coextrusion 11 vorgesehenen Extruder 16 zugeführt wird, und damit aus einem auf dem Kernprofil 10 sehr gut haftenden Polymer 15. Nach der Coextrusion 11 der Beschichtung 12 wird das Hohlkammerprofil 1 in einer weiteren Abkühlvorrichtung 14' (z.B. einem Wasserbad) final abgekühlt und kalibriert. Ferner ist optional zwischen der ersten Abkühlvorrichtung 14 und der Coextrusion 11 eine weiteres Ziehwerkzeug vorgesehen (nicht dargestellt).

Die Fig. 3a bis 3c zeigen erfindungsgemäß hergestellte Fenster-Hohlkammerprofile 1, welche beispielsweise mit den in Fig. 1 oder 2 beschriebenen Verfahren produziert werden können. Der vergrößerte Ausschnitt der Fig. 3a zeigt die in die thermoplastische Matrix 4 des Kernprofils 10 eingebetteten Verstärkungsfasern 5 sowie die hier übertrieben dick dargestellte Beschichtung 12 aus dem Beschichtungsmaterial 15. Der Gewichtsanteil der Verstärkungsfasern 5 im Kernprofil 10 beträgt im Ausführungsbeispiel mehr als 80 %. Beim Ausführungsbeispiel gemäß Fig. 3a werden vom mehrere Hohlkammern 2 aufweisenden Kernprofil 10 und der Beschichtung 12 gemeinsam zwei weitere Hohlkammern 2' gebildet. Entsprechend erfolgt in diesem Ausführungsbeispiel lediglich ein bereichsweiser Auftrag der Beschichtung 12 auf die äußere Oberfläche des Kernprofils 10; in den Anschlussbereichen 17 der von Kernprofil 10 und Beschichtung 12 gemeinsam gebildeten Hohlkammern 2' erfolgte keine Beschichtung der äußeren Oberfläche des Kernprofils 10, da diese Anschlussbereiche 17 nach außen hin nicht sichtbar sind. Die Hohlkammerprofile 1 umfassen ferner in allen Ausführungsbeispielen gemäß den Fig. 3a bis 3c Funktionselemente 18, 18' in Form von Aufnahmenuten für (nicht dargestellte) Dichtungselemente bzw. Rastelemente, wobei die Aufnahmenuten 18 in den Fig. 3a und 3b jeweils allein vom Material 15 der Beschichtung 12 - also ohne Kernprofil 10 - gebildet werden. In Fig. 3c hingegen werden auch die Funktionselemente 18 jeweils durch einen beschichteten Querschnittsbereich des Kernprofils 10 gebildet, d.h. das Kernprofil 10 trägt hier wesentlich zur Gestalt der Funktionselemente bei. In den Fig. 3a bis 3c ist das Fenster-Hohlkammerprofil 1 als Flügelrahmenprofil ausgebildet. Entsprechend weist hier das Kernprofil 10 jeweils einen Falzgrund 19 zur Aufnahme mindestens einer (nicht dargestellten) Glasscheibe auf. In den Fig. 3b und 3c wird die Beschichtung 12 nahezu vollflächig auf die äußere Oberfläche des Kernprofils 10 aufgetragen. Lediglich der Nutgrund der jeweils rechten Aufnahmenut 18' wird allein vom Kernprofil 10 gebildet, wobei dies auch für das Ausführungsbeispiel gemäß Fig. 3a gilt. Ferner werden in allen drei Ausführungsbeispielen gemäß Fig. 3a bis 3c lediglich von der Beschichtung 12 Vorsprünge 20 einer Euronut 21 des Hohlkammerprofils 1 zur Aufnahme von (nicht dargestellten) Verriegelungselementen gebildet.

Die in Fig. 3a bis 3c dargestellten Hohlkammerprofile 1 können durch den Zusatz von Farbpigmenten 22 zum Material 15 der Beschichtung 12 vor dem Auftrag auf das Kernprofil 10 entsprechend eingefärbt werden. Neben dem Einsatz klassischer Weißpigmente 22, z.B. Titandioxid, können insbesondere auch Farbpigmente 22 verwendet werden, die der Beschichtung 12 eine "echte" Farbe verleihen und z.B. zu einer roten, grünen, blauen, grauen, gelben oder auch schwarzen Einfärbung des Hohlkammerprofils 1 führen. In den Ausführungsbeispielen nicht dargestellt, jedoch im Rahmen der Erfindung ebenfalls möglich ist es, dass die äußere Beschichtung als Flüssigkeit und / oder Pulver auf das Kernprofil 10 aufgetragen und danach zu einer Lackschicht ausgehärtet wird.

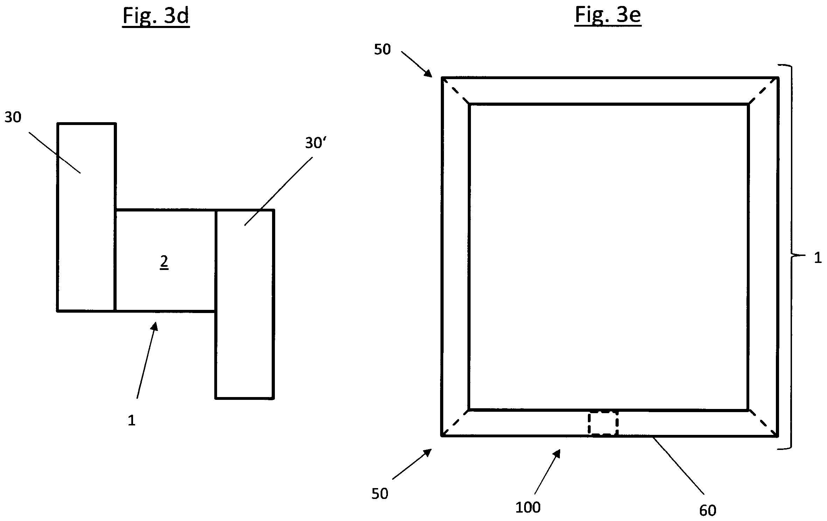

Beim Ausführungsbeispiel gemäß Fig. 3d ist das Fenster-Hohlkammerprofil 1 als Kernelement ausgebildet, welches innen- und außenseitig jeweils mit einer Schalung 30, 30' versehen ist. Diese Schalungen 30, 30' können jeweils aus Aluminium, Holz oder ebenfalls aus Kunststoff bestehen und prägen das Design des aus den Elementen 1, 30, 30' zusammen gesetzten Gesamtprofils. Bei der Bildung eines Tür- oder Fensterrahmens mit z.B. vier Ecken kann eine jeweilige Eckverbindung der Schalungen 30, 30' untereinander entfallen, da die Eckverbindungen des gesamten Rahmens durch entsprechende Eckverschweißungen von den auf Gehrung geschnittenen Fenster-Hohlkammerprofilen 1 (hier also den Kernelementen) hergestellt werden.

Beim Ausführungsbeispiel gemäß Fig. 3e wird ein rechteckiger Hohlkammerrahmen 100 eines Fenster- oder Türprofils dadurch gebildet, dass zunächst ein erfindungsgemäßes Hohlkammerprofil 1 in den Ecken 50 jeweils auf entsprechende Gehrung geschnitten wird, so dass dort nur die Außenwandung 60 verbleibt. Durch jeweiliges Knicken der verbleibenden Außenwandung 60 in den Ecken 50 wird danach der Hohlkammerrahmen 100 gebildet. Somit besteht der gesamte (üblicherweise aus vier Profilen zusammen gesetzte) Hohlkammerrahmen 100 hier aus einem einzigen Hohlkammerprofil 1, welches in einer der Ecken mit sich selbst zum geschlossenen Rahmen 100 verbunden, vorzugsweise verschweißt wird. Vorteilhaft hierbei ist, dass die Verstärkungsfasern 5 in der Außenwandung 60 komplett umlaufen und somit zu einer sehr hohen Stabilität beitragen.

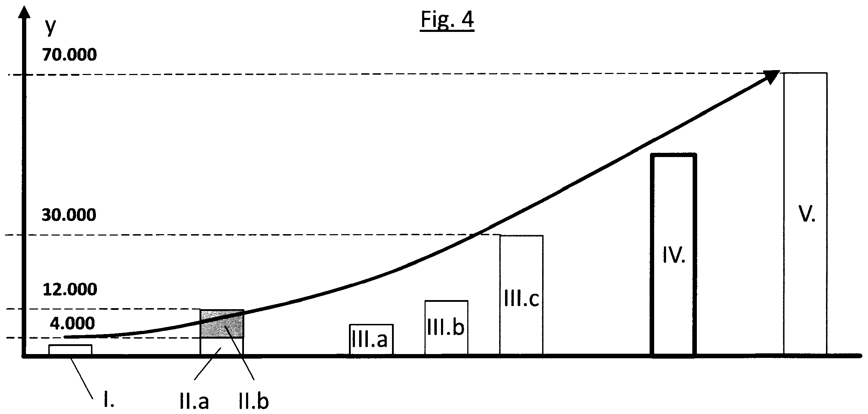

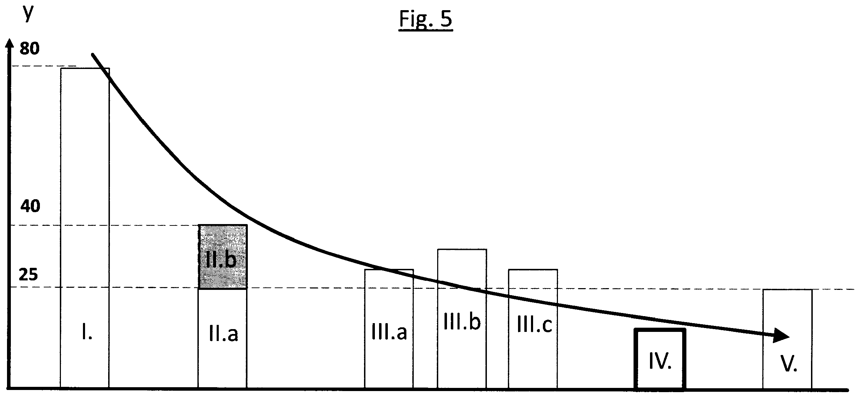

Die nachfolgenden Fig. 4 und 5 zeigen die Performance erfindungsgemäß hergestellter Hohlkammerprofile 1 im Vergleich zum Stand der Technik. Es ist erkennbar, dass mit einem erfindungsgemäß hergestellten PA6-Hohlkammerprofil 1 (Hohlkammer aus faserverstärktem PA6 mit PA6-Beschichtung; Ziffer IV.) eine erheblich höhere mechanische Steifigkeit (Werte auf der y-Achse: E-Modul in N/mm²) erzielt werden kann als dies bei einem unverstärkten PVC-Profil (I.) oder einem kurzglasfaserverstärkten (II.a, siehe eingangs erwähnte Druckschrift EP 2 191 090 B1) bzw. langglasfaserverstärkten PVC-Profil (II.b, grau unterlegt, s. EP 2 953 775 A1) möglich ist. Auch gegenüber einer endlosen, in das Extrusionswerkzeug als separates Element einlaufenden Armierung (EP 2 493 673 A1) mittels Organoblech (III.a), Aluminiumblech (III.b) oder Stahlblech (III.c) bietet das erfindungsgemäß hergestellte PA6-Profil 1 (IV.) hier deutliche Vorteile. Das in der eingangs genannten Druckschrift EP 2 528 723 B1 beschriebene Armierungsverfahren ermöglicht ebenfalls nur die Herstellung von Profilen mit deutlich schlechterer Performance und ist etwa im Bereich von II.a, maximal II.b anzusiedeln. Mit dem erfindungsgemäß hergestellten PA6-Hohlkammerprofil 1 (IV.) können annähernd mechanische Eigenschaften wie bei einem Aluminium-Gussprofil ohne thermische Trennung (V.) erzielt werden. Letzteres weist jedoch erheblich schlechtere Wärmedämmeigenschaften auf und ist außerdem sehr teuer.

Ein weiterer Vorteil der erfindungsgemäßen Lehre liegt darin, dass die damit hergestellten Hohlkammerprofile 1 nur einen sehr niedrigen Wärmeausdehnungskoeffizienten aufweisen. Dieser Vorteil ist in der Fig. 5 dargestellt. Hier sind auf der y-Achse jeweils die thermischen Ausdehnungskoeffizienten in der Dimension 10⁻⁶/K dargestellt, wobei die Bezeichnungen Ziff. I., II.a, II.b usw. sich jeweils auf dieselben Profile beziehen wie in Fig. 4.. Die Wärmeausdehnung erfindungsgemäßer Hohlkammerprofile 1 (IV.) ist deutlich niedriger als bei unverstärktem PVC (I.) sowie bei mit Kurzfasern (II.a) bzw. Langfasern (II.b) verstärkten Profilen. Auch sind hier deutliche Vorteile gegenüber bandförmig armierten (III.a Organoblech, III.b Aluminium, III.c Stahlband) PVC-Profilen erkennbar. Sogar Aluminiumprofile (V.) weisen hier eine schlechtere Performance - also einen größeren Ausdehnungskoeffizienten - auf als die erfindungsgemäß hergestellten Hohlkammerprofile 1.

Die erfindungsgemäße Lehre ermöglicht es insbesondere, Fenster mit einer Größe von mehr als vier Quadratmetern Glasfläche, insbesondere mehr als fünf Quadratmetern Glasfläche, vorzugsweise ohne Stahlarmierung, herzustellen. Die Herstellung von Fenstern solcher Größe erforderte bislang den Einsatz von Aluminiumprofilen. Bei der Herstellung des Fensterrahmens werden in bekannter Weise vier auf Gehrung geschnittene Hohlkammerprofile 1 miteinander verbundenen, z.B. durch Schweißen oder auch den endseitigen Einschub von separaten Verbindungselementen.

## Patentansprüche

1. Verfahren zur Herstellung eines Hohlkammerprofils (1),
- wobei das Hohlkammerprofil (1) mit Hilfe eines Strangproduktionsprozesses (3) hergestellt wird,
- wobei während dieses Strangproduktionsprozesses (3) in die Matrix (4) des Hohlkammerprofils (1) endlose Verstärkungsfasern (5) integriert werden,
- wobei das Kernprofil (10) zur Verbesserung der Oberflächengüte des Hohlkammerprofils (1) mit einer äußeren Beschichtung (12) aus einem nicht faserverstärkten Material versehen wird und
- wobei dem Material (15) der Beschichtung (12) vor dem Auftrag auf das Kernprofil (10) Farbpigmente (22) zugesetzt werden,
- wobei
das mehrere Hohlkammern (2, 2') aufweisende thermoplastische Hohlkammerprofil (1) als Fenster- oder Tür-Hohlkammerprofil (1) in Form eines Blendrahmenprofils oder Flügelrahmenprofils ausgebildet wird,
- wobei
der Strangproduktionsprozess (3) als reaktive Pultrusion ausgebildet ist, die zur Herstellung eines endlos faserverstärkten, thermoplastischen, mehrere Hohlkammern (2) aufweisenden Kernprofils (10) des Hohlkammerprofils (1) dient, und
- wobei
die thermoplastische Matrix (4) des Kernprofils (10) aus dünnflüssigen Monomeren (MO) und/oder reaktiven Oligomeren (MO) hergestellt wird, die während der reaktiven Pultrusion (3) zum Thermoplast polymerisiert werden.

2. Verfahren nach Anspruch 1, **dadurch gekennzeichnet, dass** die Beschichtung (12) mindestens 70 % der äußeren Oberfläche des Kernprofils (10) bedeckt.

3. Verfahren nach Anspruch 1 oder 2, **dadurch gekennzeichnet, dass** die thermoplastische Matrix (4) des Kernprofils (10) als Polyacrylat-Matrix, Polyester-Matrix oder Polyamid-Matrix ausgebildet wird.

4. Verfahren nach einem der Ansprüche 1 bis 3, **dadurch gekennzeichnet, dass** die Beschichtung (12) aus einem auf dem Kernprofil (10) haftenden Polymer (15) hergestellt wird, welches vorzugsweise dem Material der thermoplastischen Matrix (4) des Kernprofils (10) entspricht.

5. Verfahren nach Anspruch 4, **dadurch gekennzeichnet, dass** die äußere Beschichtung (12) mit dem Kernprofil (10) coextrudiert wird.

6. Verfahren nach einem der Ansprüche 1 bis 5, **dadurch gekennzeichnet, dass** lediglich von der Beschichtung (12) mindestens ein Funktionselement (18) gebildet wird.

7. Verfahren nach einem der Ansprüche 1 bis 6, **dadurch gekennzeichnet, dass** die äußere Beschichtung (12) als Flüssigkeit und/oder Pulver auf das Kernprofil (10) aufgetragen und danach zu einer Lackschicht ausgehärtet oder als Folie auf das Kernprofil (10) aufkaschiert wird.

8. Verfahren nach einem der Ansprüche 1 bis 7, **dadurch gekennzeichnet, dass** das Hohlkammerprofil (1) als Kernelement ausgebildet ist, welches innen- und/oder außenseitig mit einer Schalung versehen ist.

9. Verfahren nach Anspruch 8, **dadurch gekennzeichnet, dass** die Schalung aus Aluminium und/oder Holz und/oder Kunststoff besteht.

## Claims

1. Method for producing a hollow-chamber profile (1),
- wherein the hollow-chamber profile (1) is produced with the aid of a strand production process (3),
- wherein during this strand production process (3) continuous reinforcing fibres (5) are integrated into the matrix (4) of the hollow-chamber profile (1),
- wherein the core profile (10), in order to improve the surface quality of the hollow-chamber profile (1), is provided with an outer coating (12) made of a non-fibre-reinforced material, and
- wherein coloured pigments (22) are added to the material (15) of the coating (12) prior to application to the core profile (10),
- wherein the thermoplastic hollow-chamber profile (1) which has a plurality of hollow chambers (2, 2') takes the form of a window or door hollow-chamber profile (1) in the form of a window frame profile or sash frame profile,
- wherein the strand production process (3) takes the form of reactive pultrusion, which serves for producing a continuous-fibre-reinforced thermoplastic core profile (10), having a plurality of hollow chambers (2), of the hollow-chamber profile (1), and
- wherein the thermoplastic matrix (4) of the core profile (10) is produced from low-viscosity monomers (MO) and/or reactive oligomers (MO) which during the reactive pultrusion (3) are polymerised to form the thermoplastic material.

2. Method according to Claim 1, **characterised in that** the coating (12) covers at least 70% of the outer surface of the core profile (10).

3. Method according to Claim 1 or 2, **characterised in that** the thermoplastic matrix (4) of the core profile (10) takes the form of a polyacrylate matrix, polyester matrix or polyamide matrix.

4. Method according to one of Claims 1 to 3, **characterised in that** the coating (12) is produced from a polymer (15) which adheres to the core profile (10) and which preferably corresponds to the material of the thermoplastic matrix (4) of the core profile (10).

5. Method according to Claim 4, **characterised in that** the outer coating (12) is coextruded with the core profile (10).

6. Method according to one of Claims 1 to 5, **characterised in that** at least one functional element (18) is formed solely by the coating (12).

7. Method according to one of Claims 1 to 6, **characterised in that** the outer coating (12) is applied to the core profile (10) as a liquid and/or powder and thereafter is cured to form a lacquer layer or is laminated onto the core profile (10) as a film.

8. Method according to one of Claims 1 to 7, **characterised in that** the hollow-chamber profile (1) is formed as a core element which is provided on the inside and/or outside with formwork.

9. Method according to Claim 8, **characterised in that** the formwork consists of aluminium and/or wood and/or plastics material.

## Revendications

1. Procédé de fabrication d'un profil de chambre creuse (1),
- dans lequel le profil de chambre creuse (1) est fabriqué à l'aide d'un processus de production par extrusion (3),
- dans lequel des fibres de renforcement sans fin (5) sont intégrées dans la matrice (4) du profil de chambre creuse (1) pendant ledit procédé de production par extrusion (3),
- dans lequel le profil central (10) est pourvu d'un revêtement extérieur (12) composé d'un matériau non renforcé par des fibres pour améliorer la qualité de surface du profil de chambre creuse (1), et
- dans lequel des pigments de couleur (22) sont ajoutés au matériau (15) du revêtement (12) avant l'application sur le profil central (10),
- dans lequel le profil de chambre creuse (1) thermoplastique présentant les plusieurs chambres creuses (2, 2') est réalisé en tant que profil de chambre creuse de fenêtre ou de porte (1) sous la forme d'un profil de dormant ou d'un profil de battant,
- dans lequel le processus de production par extrusion (3) est réalisé en tant que pultrusion réactive qui sert à fabriquer un profil central (10), renforcé par des fibres sans fin, thermoplastique, présentant plusieurs chambres creuses (2), du profil de chambre creuse (1), et
- dans lequel la matrice thermoplastique (4) du profil central (10) est fabriquée à partir de monomères fluides (MO) et/ou d'oligomères réactifs (MO), qui sont polymérisés en le thermoplastique au cours de la pultrusion réactive (3).

2. Procédé selon la revendication 1, **caractérisé en ce que** le revêtement (12) occupe au moins 70 % de la surface extérieure du profil central (10).

3. Procédé selon la revendication 1 ou 2, **caractérisé en ce que** la matrice thermoplastique (4) du profil central (10) est réalisée en tant que matrice de polyacrylate, matrice de polyester ou de matrice de polyamide.

4. Procédé selon l'une quelconque des revendications 1 à 3, **caractérisé en ce que** le revêtement (12) est fabriqué à partir d'un polymère (15) adhérant sur le profil central (10), lequel correspond de préférence au matériau de la matrice thermoplastique (4) du profil central (10).

5. Procédé selon la revendication 4, **caractérisé en ce que** le revêtement extérieur (12) est coextrudé avec le profil central (10).

6. Procédé selon l'une quelconque des revendications 1 à 5, **caractérisé en ce qu'**au moins un élément fonctionnel (18) est formé seulement par le revêtement (12).

7. Procédé selon l'une quelconque des revendications 1 à 6, **caractérisé en ce que** le revêtement extérieur (12) est appliqué en tant que liquide et/ou en tant que poudre sur le profil central (10) puis est durci en une couche de vernis ou est contrecollé en tant que film sur le profil central (10).

8. Procédé selon l'une quelconque des revendications 1 à 7, **caractérisé en ce que** le profil de chambre creuse (1) est réalisé en tant qu'élément central, lequel est pourvu d'un coffrage côté intérieur et/ou côté extérieur.

9. Procédé selon la revendication 8, **caractérisé en ce que** le coffrage est constitué d'aluminium et/ou de bois et/ou de matière plastique.
